# DEMANDE DE BREVET EUROPEEN

(11) **EP 1 746 446 A1**
(43) Date de publication de la demande: **24.01.2007**
(21) Numéro de dépôt: 05106735.3
(22) Date de dépôt: 22.07.2005
(51) Int. Cl.: G02B 6/122, G02F 1/01

(54) **Element à couleur structurale**

(71) Demandeur: CSEM Centre Suisse d'Electronique et de Microtechnique SA Recherche et Développement, 2007 Neuchâtel (CH)
(72) Inventeur: Stanley, Ross, 1005, Lausanne (CH); Liley, Martha, 2072, Saint-Blaise (CH)
(74) Mandataire: GLN

(57) **Abrégé**

L'invention concerne un élément susceptible de présenter un effet de couleur structurale en réponse à un rayonnement lumineux d'intensité non nulle pour des longueurs d'ondes comprises dans un intervalle défini par une valeur minimum λₘᵢₙ et une valeur maximum λₘₐₓ. Cet élément est caractérisé en ce que :
- il comporte un substrat (10) et, déposée sur ce substrat, au moins une zone comprenant au moins trois couches de micro-sphéroïdes (12) sensiblement identiques et formant un empilement compact, chaque micro-sphéroïde définissant avec ses voisins des espaces inter-sphéroïdes,
- la longueur d'onde minimum λₘᵢₙ est égale à 0,2 fois le diamètre des micro-sphéroïdes et la longueur d'onde maximum λₘₐₓ à 1,3 fois leur diamètre,
- le matériau formant les micro-sphéroïdes est sensiblement transparent dans ledit intervalle de longueurs d'ondes, et
- le rapport des indices de réfraction du matériau formant les micro-sphéroïdes et du milieu formant les espaces inter-sphéroïdes est supérieur à 1.1.

## Description

L'invention appartient au domaine de la microtechnique. Elle concerne, plus précisément, un élément dit à couleur structurale.

Les couleurs structurales sont des couleurs liées à la structure d'un matériau à l'échelle des longueurs d'onde de la lumière, plutôt qu'aux propriétés optiques intrinsèques du matériau lui-même. Ces couleurs présentent l'avantage de ne pas s'altérer sous l'action de la lumière, et sont illustrées par quelques exemples naturels spectaculaires, tels que le bleu du ciel, les plumes d'un paon ou l'opale.

Différents mécanismes physiques sont à l'origine de ce type de couleurs pour un matériau transparent tel que l'air, l'eau ou le verre; les interférences, la diffraction, la diffusion avec ou sans dispersion, et la biréfringence.

Dans le cas d'un réseau de diffraction, par exemple, la diffraction par des rainures régulièrement espacées, combinée aux interférences entre les ondes diffractées, permet la séparation des longueurs d'onde de la lumière. Un mécanisme similaire se rencontre au sein d'un objet totalement naturel, l'opale. Cette pierre est constituée de grains agglomérés, chaque grain étant formé de sphéroïdes de silice pris dans une matrice dont l'indice est proche de celui de l'eau. A l'intérieur d'un même grain, les sphéroïdes présentent un arrangement ordonné, formant un réseau à trois dimensions. La diffraction par les sphéroïdes, combinée aux interférences liées à leur ordonnancement, a pour effet l'extinction de certaines longueurs d'onde et, par conséquent, la coloration de la pierre. Chaque grain étant caractérisé par une taille de sphéroïdes et une orientation différente, il apparaît d'une couleur qui lui est propre.

La présente invention s'inspire de la structure de l'opale pour proposer un dispositif dont la couleur provient d'un effet de structure de surface jusqu'ici inconnu.

Plus précisément, l'invention concerne un élément susceptible de présenter un effet de couleur structurale en réponse à un rayonnement électromagnétique d'intensité non nulle pour des longueurs d'onde comprises dans un intervalle défini par une valeur minimum λₘᵢₙ et une valeur maximum λₘₐₓ. Selon l'invention, cet élément possède les caractéristiques suivantes :
- il comporte un substrat et, déposées sur ce substrat, au moins trois couches de micro-sphéroïdes sensiblement identiques et formant un empilement compact, chacun définissant avec ses voisins des espaces inter-sphéroïdes,
- la longueur d'onde minimum λₘᵢₙ est égale à 0,2 fois le diamètre des micro-sphéroïdes et la longueur d'onde maximum λₘₐₓ à 1.3 fois leur diamètre,
- le matériau formant les micro-sphéroïdes est sensiblement transparent dans ledit intervalle de longueurs d'onde, et
- le rapport des indices de réfraction du matériau formant les micro-sphéroïdes et du milieu formant les espaces inter-sphéroïdes est supérieur à 1.1.

D'autres caractéristiques et avantages de l'invention apparaîtront à la lecture de la description qui suit, faite en regard du dessin annexé dans lequel :
- la figure 1 est une vue de côté d'un élément à couleur structurale selon l'invention,
- la figure 2 est une vue de dessus de différents niveaux de cet élément,
- la figure 3 représente des spectres de la lumière obtenus avec différents éléments à couleur structurale,
- la figure 4 est une vue de dessus de deux types d'éléments à couleur structurale selon l'invention,
- la figure 5 illustre un exemple de procédé de fabrication d'un élément à couleur structurale selon l'invention,
- la figure 6 représente un exemple d'application d'élément à couleur structurale selon l'invention, et
- la figure 7 représente un deuxième exemple d'application de ce type d'élément.

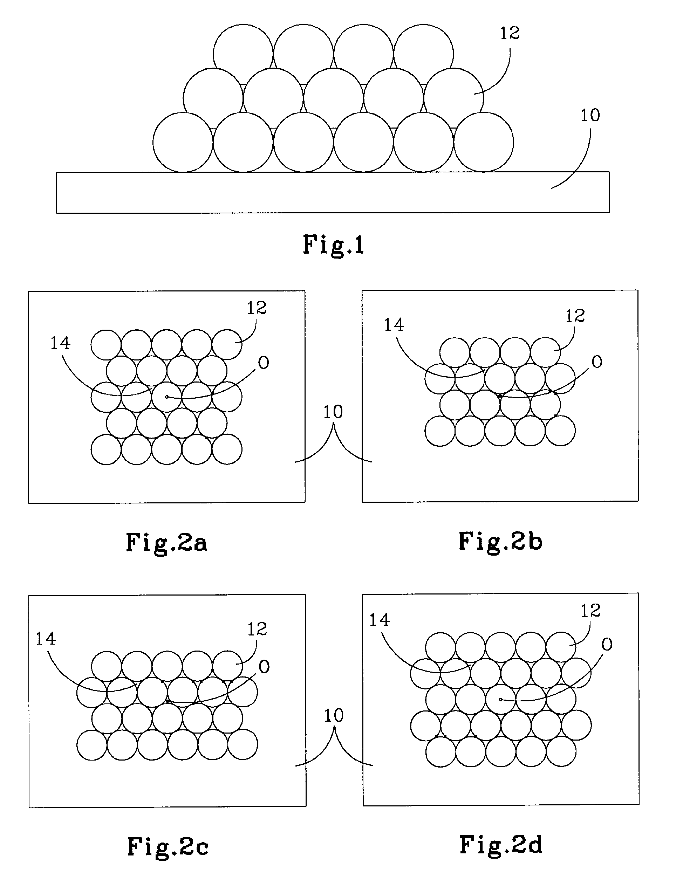

L'élément à couleur structurale, représenté schématiquement sur la figure 1, comporte un substrat plan 10, tel qu'une plaque de verre ou de silicium, sur lequel sont disposés des micro-sphéroïdes ou micro-billes 12, sensiblement identiques, transparents ou faiblement absorbants, en silice, polystyrène, oxyde de zinc ou autre, d'un diamètre de l'ordre du micron, et commercialisés notamment par la firme Duke Scientific (Palo Alto - USA).

L'ordonnancement des micro-sphéroïdes 12 est compact, c'est à dire que le volume total de l'arrangement est minimum. En pratique, les micro-sphéroïdes sont arrangés en empilement compact de mono-couches, elles-mêmes compactes. A l'intérieur de chaque mono-couche compacte, chaque micro-sphéroïde possède six proches voisins, deux proches voisins étant définis comme présentant un point de contact entre eux.

Les micro-sphéroïdes d'une mono-couche définissent, en outre, avec leurs six proches voisins, six espaces inter-sphéroïdes dans lesquels sont partiellement logés les micro-sphéroïdes de la mono-couche située directement au dessus. Cet aspect de l'empilement sera développé ultérieurement. Un micro-sphéroïde d'une couche interne de l'arrangement possède, par ailleurs, trois proches voisins de la couche supérieure et trois proches voisins de la couche inférieure, avec lesquels il forme, de la même façon, des espaces inter-sphéroïdes.

Le diamètre des micro-sphéroïdes formant l'arrangement selon l'invention prend une valeur comprise dans un intervalle déterminé, comme explicité par la suite. Par ailleurs, le rapport de l'indice de réfraction des micro-sphéroïdes à celui du milieu formant les espaces inter-sphéroïdes est supérieur à la valeur de 1.1, pour des raisons qui apparaîtront plus loin.

L'arrangement compact de la figure 1 est représenté sur la figure 2, en vue de dessus, afin de faire apparaître la structure verticale d'un tel arrangement.

La figure 2a montre la première mono-couche de micro-sphéroïdes 12 disposés sur le substrat 10. Ainsi représenté, il apparaît plus clairement que les micro-sphéroïdes 12, agencés en structure compacte, possèdent chacun six proches voisins, mais également six espaces inter-sphéroïdes 14 directement voisins. A ce stade de l'arrangement, toutes les positions des billes sont équivalentes, et il en va de même pour tous les espaces inter-sphéroïdes 14.

Dans la suite de la description, cette première mono-couche sera désignée par la lettre A. Afin de se repérer en référence à cette couche sur les figures 2b, 2c et 2d, un point noté O est représenté au centre d'une bille 12 située elle-même sensiblement au centre de la mono-couche.

La figure 2b représente une deuxième mono-couche, référencée B, de micro-sphéroïdes 12 disposée sur la première mono-couche A et, elle aussi, compacte. Afin de former un empilement compact, les micro-billes 12 de la deuxième couche B sont logées partiellement dans les espaces inter-sphéroïdes 14 de la première couche A. Ces espaces 14 sont, à ce stade, parfaitement équivalents, mais ne peuvent être tous occupés pour des raisons géométriques. Chaque espace inter-sphéroïde 14 possède, en effet, trois espaces 14 voisins distants de moins d'une fois le diamètre d'une micro-bille, de sorte que, si un espace 14 est occupé, les trois espaces voisins 14 restent libres. Ainsi, les micro-sphéroïdes 12 de la deuxième couche forment une couche identique à la première, mais décalée par rapport à celle-ci, de façon à former un empilement compact noté AB, en référence aux couches A et B.

Sur la figure 2b, le point référence O de la couche A apparaît au centre d'un espace inter-sphéroïde de la couche B. Il ne peut pas en être autrement, puisque les micro-billes 12 de la couche B ne peuvent se loger partiellement que dans les espaces inter-sphéroïdes de la couche A.

Considérant maintenant les espaces inter-sphéroïdes de la deuxième mono-couche B, il apparaît que ceux-ci ne sont plus équivalents. En effet, cinquante pour cent des espaces 14 de la couche B sont situés au dessus d'une micro-bille 12 de la couche A, et cinquante pour cent sont situés au dessus d'un espace 14 de cette même couche. Pour former un empilement compact, les micro-billes d'une troisième mono-couche compacte ne peuvent se loger que dans un type de ces espaces inter-sphéroïdes 14, ou l'autre, mais pas les deux simultanément. L'empilement compact réalisé est alors soit de type cubique faces centrées, lorsque les micro-sphéroïdes 12 d'une troisième mono-couche occupent un site situé au dessus d'un espace 14 de la couche A, soit de type hexagonal faces centrées, lorsque les micro-sphéroïdes 12 d'une troisième mono-couche occupent un site situé au dessus d'une micro-bille 12 de la couche A

La figure 2c représente ainsi une troisième mono-couche qui, avec les deux premières, forme un empilement compact de type cubique faces centrées. Le point de référence O apparaît sur cette couche dans un espace inter-sphéroïde 14. Cette troisième mono-couche est référencée C, ses micro-sphéroïdes étant décalés par rapport aux micro-sphéroïdes des couches A et B. L'arrangement constitué est noté ABC.

La figure 2d représente, par opposition, une troisième mono-couche formant, avec les deux premières, un empilement compact de type hexagonal faces centrées. Le point de référence O apparaît, sur cette couche, au centre d'une micro-bille 12. Cette troisième mono-couche est référencée A, ses micro-sphéroïdes occupant des sites situés au dessus des micro-sphéroïdes de la couche A. L'arrangement constitué est noté ABA.

Pour une quatrième couche, le même type d'alternative apparaît. Les micro-billes 12 sont situées soit au dessus d'une micro-bille 12 de la couche B, soit au dessus d'un espace inter-sphéroïde de cette même couche. Pour des couches suivantes, le même choix se présente systématiquement : Les micro-sphéroïdes peuvent occuper un site situé au dessus d'un micro-sphéroïde 12 ou d'un espace inter-sphéroïde 14 de l'avant dernière couche. Il en résulte que le nombre d'arrangements compacts possibles pour un nombre de couches n est égal à 2⁽ⁿ⁻²⁾, pour n supérieur ou égal à deux. Cependant, certaines symétries apparaissent, de sorte que le nombre d'arrangements distincts, pour un nombre de couches n, est en réalité inférieur à 2⁽ⁿ⁻²⁾.

Le tableau suivant présente, pour un nombre de couches allant jusqu'à cinq, la structure des différents arrangements compacts possibles et le nombre d'arrangements distincts pour un fonctionnement en transmission (chiffres entre parenthèses pour les couches 4 et 5) et en réflexion.

| Nombre de couches | Structure de l'empilement | Nombre d'arrangements distincts |
|---|---|---|
| 1 | A | 1 |
| 2 | AB | 1 |
| 3 | ABA | 2 |
| | ABC | |
| 4 | ABAB | (3) / 4 |
| | ABAC | |
| | ABCA | |
| | ABCB | |
| 5 | ABABA | (6) / 8 |
| | ABABC | |
| | ABACA | |
| | ABACB | |
| | ABCAB | |
| | ABCAC | |
| | ABCBA | |
| | ABCBC | |

Les empilements compacts réguliers du type des figures 1 et 2 présentent, observés au microscope, un aspect coloré, que ce soit en réflexion ou en transmission. Le nombre de couleurs différentes obtenues, pour un nombre de couches donné, corrèle précisément avec le nombre d'arrangements distincts possibles pour ce même nombre de couches. De plus, il a été constaté qu'une couleur donnée correspond à un arrangement donné. Ainsi, deux structures à base de micro-sphéroïdes identiques, possédant une même épaisseur de couche, une même périodicité, un même volume et un même arrangement dans le plan horizontal, présentent des couleurs différentes pour des arrangements distincts dans le plan vertical.

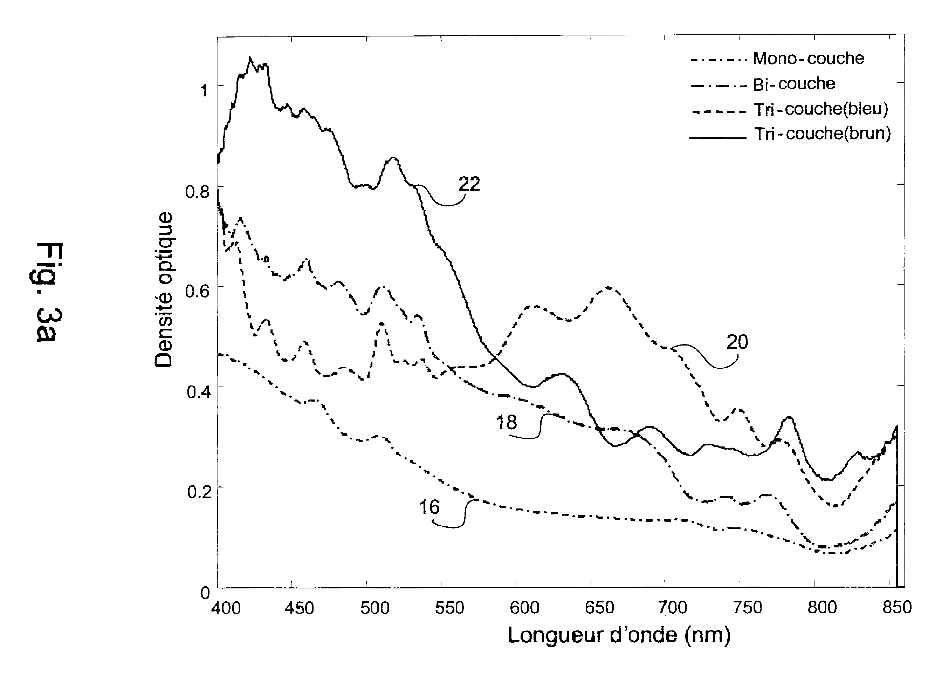

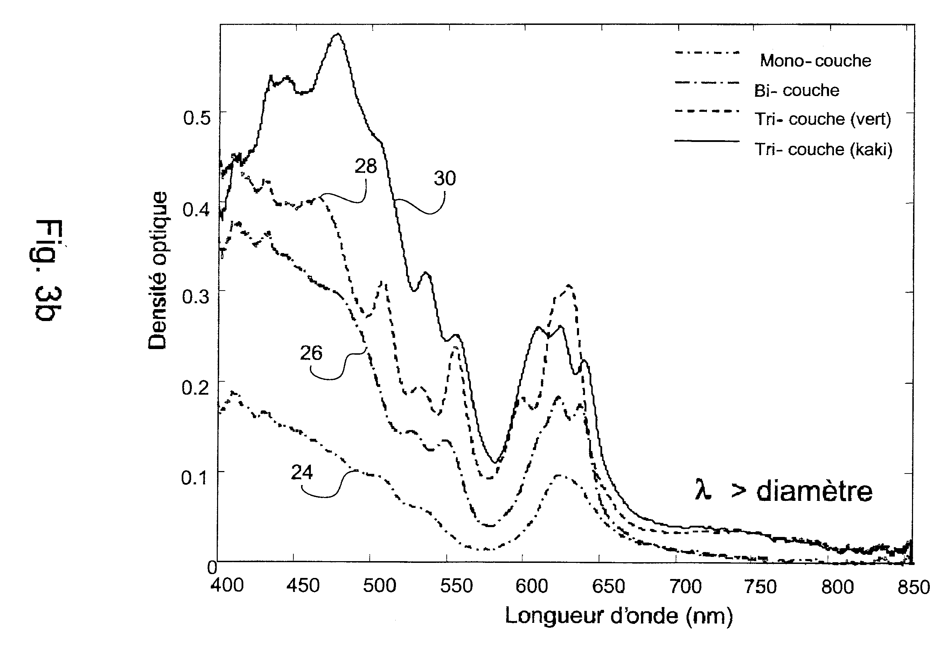

Les figures 3a et 3b montrent les spectres optiques obtenus pour différents arrangements et pour des tailles de micro-billes différentes. Les courbes 16, 18, 20 et 22 représentent la densité optique (soit: ― log₁₀ τ où τ représente le rapport de l'intensité de la lumière transmise à l'intensité de la lumière incidente) en fonction de la longueur d'onde, obtenue respectivement pour une mono-couche, une bi-couche, une tri-couche de type ABC et une tri-couche de type ABA et pour des micro-billes de 835nm. Les courbes 24, 26, 28 et 30 représentent cette même densité optique en fonction de la longueur d'onde, pour les mêmes arrangements respectifs, et pour une taille de micro-billes de 560nm.

Il apparaît que, pour une longueur d'onde supérieure à typiquement 1.3 fois la taille des micro-sphéroïdes (d'indice de réfraction de 1.5 et placés dans l'air), la densité optique s'annule, c'est-à-dire que l'empilement de micro-sphéroïdes devient transparent. De plus, les mêmes effets de 'coloration' (c'est-à-dire changement de longueur d'onde) ou de 'filtrage' (c'est-à-dire atténuation pour une longueur d'onde) peuvent aussi être observés dans les domaines ultraviolet ou infra-rouge du spectre optique. La taille des micro-sphéroïdes joue également un rôle primordial dans le comportement en couleur des empilements. On retiendra que, pour des micro-sphéroïdes d'indice de réfraction égal à 1,5 placés dans l'air, un effet pourra être observé sur des longueurs d'onde comprises entre 0,2 fois le diamètre des micro-sphéroïdes (pour λₘᵢₙ) et 1.3 fois leur diamètre (pour λₘₐₓ).

Un second paramètre également important entre en jeu dans le phénomène observé, à savoir l'indice de réfraction des billes ou, plus exactement, le rapport d'indices entre les micro-billes et le milieu extérieur formant les espaces inter-sphéroïdes. Pour un effet de coloration significatif, le rapport entre l'indice moyen des micro-sphéroïdes et celui du milieu extérieur doit être supérieur à la valeur 1,1. Implicitement, ceci suppose que les micro-billes sont transparentes aux longueurs d'onde considérées, mais en réalité, l'effet de coloration observé apparaît également pour un matériau formant les micro-billes, légèrement absorbant.

Les différences optiques observées ne relèvent ni d'un phénomène de simple diffraction, ni d'un phénomène de simples interférences, mais sont liées à la symétrie de l'empilement. Il s'agit bien d'un phénomène de couleur structurale nouveau.

Les éléments à couleur structurale présentés sur les figures 1 et 2 forment des empilements réguliers parfaitement ordonnés dont on vient d'exposer les propriétés optiques originales. La présente invention concerne également des éléments à couleur structurale formés par des empilements comportant des défauts d'ordonnancement, ou rupture de compacité, de type ponctuel ou étendu.

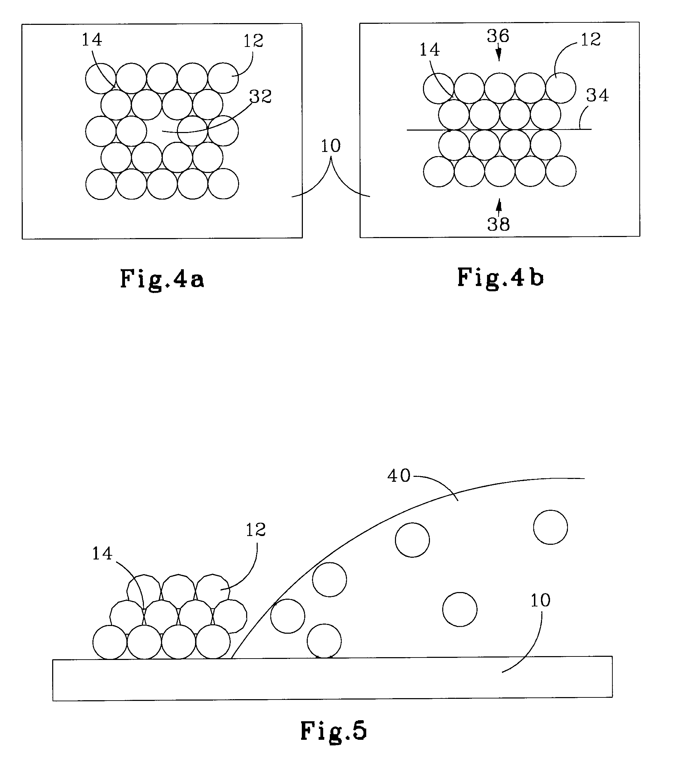

Un arrangement comportant un défaut de type ponctuel est illustré en figure 4a. Une mono-couche de micro-sphéroïdes 12 est ainsi représentée, comportant un trou 32 en lieu et place d'une micro-bille 12. Le défaut est local, et les couches supérieures et inférieures, non représentées, ne sont pas affectées par la présence de cette lacune. Un tel défaut peut être causé par le retrait d'un micro-sphéroïde, par exemple à l'aide d'une pince optique (voir thèse de Jacob P. Hoogenboom intitulée "Colloidal Epitaxy - A real-space analysis" et publiée en 2002 par l'Université d'Utrecht) ou par la combustion ou un changement d'indice de réfraction d'un micro-sphéroïde à l'aide d'un laser.

En figure 4b, l'arrangement représenté présente un défaut étendu, encore appelé dislocation, et schématisé par une ligne 34 séparant deux zones compactes 36 et 38. Comme on peut le constater, les micro-sphéroïdes situés directement de part et d'autre de la ligne de dislocation 34 ne sont pas logés partiellement dans des espaces inter-sphéroïdes 14, rompant ainsi la compacité de la couche. Le décalage introduit par cette dislocation peut donner lieu à deux empilements voisins de structures verticales différentes, par exemple, une structure ABC et une structure ABA. A l'intérieur de chacun des grains voisins, la structure est compacte, mais la dislocation introduit une discontinuité, dans une couche au moins, de la structure verticale qui se retrouve au niveau optique.

En effet, les empilements comportant des défauts ponctuels ou étendus ont localement, aux emplacements où la structure est compacte, des propriétés optiques identiques à celles des empilements parfaits. Ainsi, les empilements présentant une lacune dans l'une des couches possèdent une couleur uniforme, sauf à l'emplacement de la lacune, où la couleur est ponctuellement différente en raison de la différence de structure. De même, deux grains voisins, séparés par une dislocation et présentant une structure verticale différente en raison de cette dislocation, forment, optiquement, deux régions de couleurs différentes, séparées par une frontière très brusque.

La figure 5 présente un exemple de mode de fabrication d'élément à couleur structurale selon l'invention. Selon ce procédé, des monocouches compactes de micro-sphéroïdes, ou des empilements compacts de ces monocouches, sont réalisés à partir d'une solution d'eau ou d'éthanol contenant ces micro-sphéroïdes en suspension. Le procédé de formation d'un arrangement compact consiste à déposer sur un substrat plan 10, tel qu'une plaque de verre ou de silicium, une goutte 40 d'une telle solution. Lorsque la goutte 40 se rétracte par évaporation du liquide, les billes 12 s'ordonnent en une mono-couche ou un empilement de mono-couches, sous l'effet des tensions de surface de la goutte 40. L'arrangement ainsi obtenu est, le plus souvent, compact par zones, du type de celui présenté en figure 4b. L'arrangement des 'grains' compacts est quasi aléatoire lorsque ce procédé est utilisé, c'est à dire, que la disposition des grains les uns par rapport au autres, et leur structure verticale, ne sont pas bien contrôlées. Par ailleurs, la concentration des micro-billes dans la solution a un impact direct sur le nombre de mono-couches de micro-sphéroïdes présentes dans l'empilement. Plus cette concentration est élevée, plus le nombre de couches est important.

D'autres modes de réalisation d'empilements compacts sont décrits, par exemple, dans les articles de Dekov et al. (Nature, Vol.361, p.26, 1993) ou Wei et al. (Appl. Phys. Lett. Vol.77, p.1641, 2000). Un procédé bien connu consiste à tremper un substrat verticalement dans une solution comportant des micro-sphéroïdes en surface d'un liquide, puis à tirer le substrat verticalement. Les micro-billes viennent former une couche compacte en surface du substrat, sous l'effet des tensions de surface du liquide. Un empilement de couches est obtenu par répétition de l'opération jusqu'à obtention du nombre de couches souhaité.

On peut citer également un procédé consistant à disposer un à un les micro-sphéroïdes sur un substrat, à l'aide d'un microscope à force atomique ou d'une pince optique.

Après dépôt ordonné des micro-sphéroïdes sur le substrat, une étape ultérieure peut être nécessaire pour fixer les micro-billes dans leur position. Une telle fixation peut être réalisée par chauffage de l'ensemble substrat-sphéroïdes à une température juste suffisante pour créer des liaisons chimiques entre deux micro-billes proches voisines. Une alternative consiste à couler une matrice d'un matériau à faible indice, tel que de l'époxie, entre les micro-billes, puis à faire durcir ce matériau par recuit ou exposition UV.

Plusieurs applications peuvent être envisagées pour les éléments à couleur structurale selon l'invention. L'une d'elles est un filtre coloré. En effet, l'avantage d'un filtre formé à partir d'un empilement régulier de micro-billes plutôt qu'un pigment, est son inaltérabilité à la lumière. Ce type de filtre pourrait être employé dans de nombreux dispositif tels que, par exemple, les caméras digitales couleur. Il nécessite cependant l'emploi d'une technique de dépôt des micro-billes permettant de couvrir une surface suffisamment étendue, de façon contrôlée et non pas aléatoire.

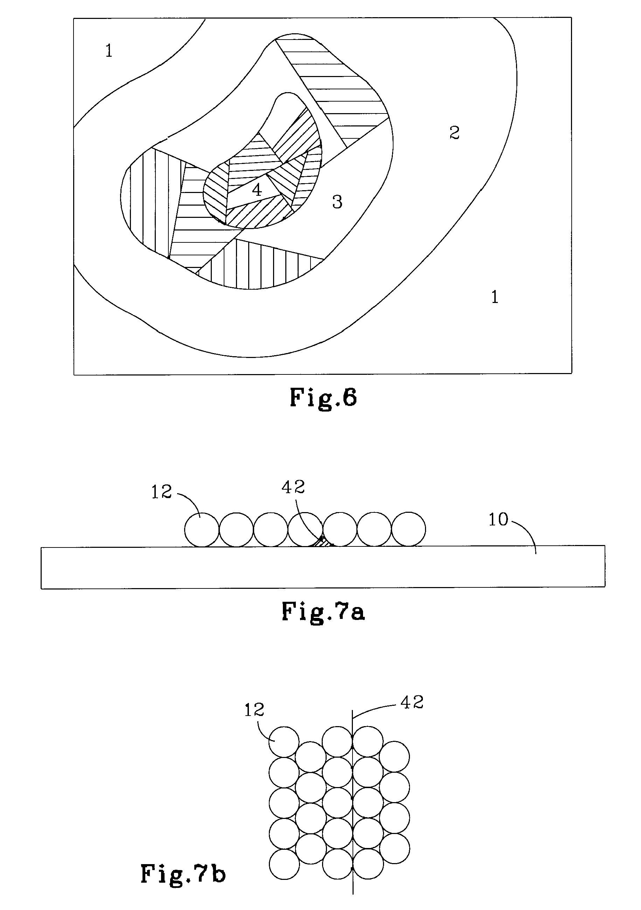

Une deuxième application potentielle est illustrée en figure 6. Il s'agit d'un motif aléatoire obtenu par un procédé de dépôt de micro-sphéroïdes décrit précédemment, consistant à laisser s'évaporer une solution contenant des micro-sphéroïdes en suspension, et donnant lieu à des arrangements compacts par zone, mais présentant une rupture de compacité entre deux zones contigues. Comme déjà mentionné, le résultat obtenu est aléatoire, c'est à dire que l'arrangement des différentes couches se fait au hasard. Le motif représenté en figure 6 présente des zones périphériques 1 et 2 qui comportent une ou deux couches de micro-sphéroïdes. La zone intermédiaire 3, présentant une mosaïque de deux couleurs, est une zone constituée d'un empilement de trois couches, et enfin la zone centrale 4, formée d'une mosaïque de trois couleurs, comporte quatre couches de micro-sphéroïdes. Ce type de motif, totalement aléatoire, peut être utilisé comme système de reconnaissance infalsifiable, car, d'une part, il est parfaitement défini, et, d'autre part, il ne peut être reproduit. Une fois mémorisé à l'aide d'un système de lecture tel qu'une caméra, il peut être fixé à un objet en toute discrétion, puis identifié à tout moment par le système de reconnaissance.

Par ailleurs, les empilements de micro-billes selon l'invention peuvent être utilisés comme support d'information à l'échelle de la taille d'un micro-sphéroïde, c'est à dire à l'échelle du micron et moins. Plusieurs moyens peuvent être envisagés pour enregistrer de l'information.

Il est possible, par exemple, de définir, avant le dépôt des micro-sphéroïdes, des limites de transition horizontale d'une structure d'empilement à l'autre. Ces limites sont matérialisées, comme illustré sur les figures 7a et 7b, par la présence d'une ride 42 en surface d'un substrat 10. La ride 34 sépare deux rangées de micro-sphéroïdes voisins, et empêche les micro-sphéroïdes situés d'un côté de la ride 42 de se loger dans les espaces inter-sphéroïdes des micro-billes situées de l'autre côté de la ride 42. La première couche présente donc une dislocation qui ne se répercute pas sur la couche supérieure. Les deux empilements formés de part et d'autre de la ride 42 présentent ainsi une structure verticale différente, et donc une couleur différente. Cette méthode permet de visualiser une information existant au niveau du substrat 10.

Une autre technique permet d'enregistrer une information sur un support constitué d'un empilement de micro-sphéroïdes uniforme. Un tel empilement présente une seule couleur puisque la couleur dépend, pour une taille de micro-sphéroïdes et un rapport d'indices de réfraction donnés, de la structure verticale de l'empilement. Il est possible, sur un tel support, d'enregistrer une information en induisant localement un changement de couleur de l'empilement, par modification du rapport des indices de réfraction. Cette modification peut être réalisée, par exemple, par remplissage des espaces inter-sphéroïdes à l'aide d'un liquide se solidifiant par la suite, et dont l'indice est différent de celui de l'air. Une autre façon de procéder consiste à utiliser des micro-billes poreuses, et à remplir localement les pores à l'aide d'un liquide, induisant ainsi une modification de l'indice de réfraction des micro-billes.

Ainsi ont été présentées plusieurs applications de l'effet de coloration ou de filtrage d'empilements de micro-sphéroïdes. On notera toutefois, que tout autre application des empilements de micro-sphéroïdes ayant certaines propriétés de tailles et d'indice de réfraction, entre dans le cadre de l'invention.

## Revendications

1. Elément susceptible de présenter un effet de couleur structurale en réponse à un rayonnement lumineux d'intensité non nulle pour des longueurs d'onde comprises dans un intervalle défini par une valeur minimum λₘᵢₙ et une valeur maximum λₘₐₓ, **caractérisé en ce que** :
- il comporte un substrat (10) et, déposée sur ce substrat, au moins une zone comprenant au moins trois couches de micro-sphéroïdes (12) sensiblement identiques et formant un empilement compact, chaque micro-sphéroïde définissant avec ses voisins des espaces inter-sphéroïdes,
- la longueur d'onde minimum λₘᵢₙ est égale à 0,2 fois le diamètre des micro-sphéroïdes et la longueur d'onde maximum λₘₐₓ à 1,3 fois leur diamètre ,
- le matériau formant les micro-sphéroïdes est sensiblement transparent dans ledit intervalle de longueurs d'onde, et
- le rapport des indices de réfraction du matériau formant les micro-sphéroïdes et du milieu formant les espaces inter-sphéroïdes est supérieur à 1.1.

2. Elément selon la revendication 2, **caractérisé en ce que** les micro-sphéroïdes de la troisième couche dudit empilement compact de micro-sphéroïdes sont partiellement logés dans des espaces inter-sphéroïdes de la deuxième couche dudit empilement, et disposés, chacun, au dessus d'un espace inter-sphéroïde de la première couche dudit empilement.

3. Elément selon la revendication 2, **caractérisé en ce que** les micro-sphéroïdes de la troisième couche dudit empilement compact de de micro-sphéroïdes sont partiellement logés dans des espaces inter-sphéroïdes de la deuxième couche dudit empilement, et disposés, chacun, au dessus d'un micro-sphéroïde de la première couche dudit empilement.

4. Elément selon la revendication 2, **caractérisé en ce que** ladite zone comporte une quatrième couche de micro-sphéroïdes sensiblement identiques, formant, avec les trois premières, un empilement compact, lesdits micro-sphéroïdes de cette quatrième couche étant partiellement logés dans des espaces inter-sphéroïdes de ladite troisième couche, et disposés, chacun, au dessus d'un micro-sphéroïde de ladite deuxième couche.

5. Elément selon la revendication 2, **caractérisé en ce que** ladite zone comporte une quatrième couche de micro-sphéroïdes sensiblement identiques, formant, avec les trois premières, un empilement compact, lesdits micro-sphéroïdes de cette quatrième couche étant partiellement logés dans des espaces inter-sphéroïdes de ladite troisième couche, et disposés, chacun, au dessus d'un espace inter-sphéroïde de ladite deuxième couche.

6. Elément selon la revendication 3, **caractérisé en ce que** ladite zone comporte une quatrième couche de micro-sphéroïdes sensiblement identiques, formant, avec les trois premières, un empilement compact, lesdits micro-sphéroïdes de cette quatrième couche étant partiellement logés dans des espaces inter-sphéroïdes de ladite troisième couche, et disposés, chacun, au dessus d'un micro-sphéroïde de ladite deuxième couche.

7. Elément selon la revendication 3, **caractérisé en ce que** ladite zone comporte une quatrième couche de micro-sphéroïdes sensiblement identiques, formant, avec les trois premières, un empilement compact, lesdits micro-sphéroïdes de cette quatrième couche étant partiellement logés dans des espaces inter-sphéroïdes de ladite troisième couche, et disposés, chacun, au dessus d'un espace inter-sphéroïde de ladite deuxième couche.

8. Elément selon l'une des revendications 1 à 7, **caractérisé en ce qu'**il comporte au moins une zone comprenant une pluralité de couches de micro-sphéroïdes sensiblement identiques, formant ensemble un empilement compact dont la structure est déterminée par la position des micro-sphéroïdes des n-ièmes couches par rapport à la position des micro-sphéroïdes des n moins deuxièmes couches.

9. Elément selon l'une des revendications 1 à 8, **caractérisé en ce qu'**il comporte une seule zone.

10. Elément selon la revendication 9, **caractérisé en ce qu'**il constitue un filtre de lumière.

11. Elément selon l'une des revendications 2 à 8, **caractérisé en ce qu'**il comporte au moins deux zones d'empilement compact séparées par une rupture de compacité.

12. Elément selon la revendication 11, **caractérisé en ce que** lesdites au moins deux zones forment des empilements différents.

13. Elément selon la revendication 12, **caractérisé en ce que** lesdits empilements diffèrent par le diamètre desdits micro-sphéroïdes.

14. Elément selon la revendication 12, **caractérisé en ce que** lesdits empilements diffèrent par le rapport des indices de réfraction du matériau formant lesdits micro-sphéroïdes au matériau formant lesdits espaces inter-sphéroïdes.

15. Elément selon la revendication 12, **caractérisé en ce que** lesdits empilements diffèrent par leur structure verticale.

16. Elément selon l'une quelconque des revendications 2 à 8, **caractérisé en ce qu'**au moins une des couches comporte au moins un défaut ponctuel.

17. Elément selon l'une des revendications 11 à 16, **caractérisé en ce qu'**il constitue un support d'information.

18. Elément selon l'une des revendications 11 à 16, **caractérisé en ce qu'**il constitue un système de reconnaissance.
